# FASCICULE DE BREVET EUROPEEN

(11) **EP 2 896 289 B1**
(45) Date de publication et mention de la délivrance du brevet: **30.11.2016**
(21) Numéro de dépôt: 14307005.0
(22) Date de dépôt: 11.12.2014
(51) Int. Cl.: A01G 17/02

(54) **Tambour d'attraction rotatif ajouré pour l'effeuillage de plantes et têtes d'effeuillage équipées d'un tel tambour**
Durchbrochene Drehtrommel mit Anziehungskraft zum Entlauben von Pflanzen, und Entlaubungsköpfe, die mit einer solchen Trommel ausgestattet sind
Apertured rotary attraction drum for defoliating plants and defoliating heads provided with such a drum

(30) Priorité: 17.01.2014 FR 1450387
(43) Date de publication de la demande: 22.07.2015
(73) Titulaire: PELLENC (Société Anonyme), 84120 Pertuis (FR)
(72) Inventeur: Gialis, Jean-Marc, 84460 Cheval Blanc (FR)
(74) Mandataire: Marek, Pierre

(56) Documents cités:
- EP-B1- 1 657 975
- FR-A1- 2 897 752
- FR-A1- 2 965 701

## Description

La présente invention concerne le domaine de l'effeuillage des arbres et arbustes. En particulier, elle s'applique à la réalisation de têtes d'effeuillage aptes à équiper des machines d'effeuillage des arbustes et arbrisseaux fruitiers et, plus particulièrement, des machines permettant d'éclaircir le matelas végétal constitué par le feuillage des rangs de ceps de vignes.

Elle a pour objet un tambour d'attraction rotatif ajouré destiné à être monté sur de telles machines dont le principe d'effeuillage consiste à plaquer les feuilles sur ledit tambour d'attraction rotatif ajouré par l'intermédiaire d'au moins un flux d'air aspirant.

On sait que dans le domaine spécifique de la vigne, il est très important, voire crucial, de diminuer la quantité de feuilles présentes dans la zone fructifère des plants de vigne et ce plusieurs fois par saison, durant toute la phase de maturation des baies de raisins, aux fins de favoriser ou d'obtenir les objectifs suivants :
- l'aération des grappes de raisin pour limiter l'apparition de la pourriture grise et autres maladies, et accélérer leur séchage,
- l'ensoleillement des grappes de raisin pour accélérer et améliorer leur maturation, notamment la coloration (pellicule du raisin plus épaisse),
- améliorer la qualité des baies,
- la pénétration des traitements phytosanitaires pour améliorer leur efficacité,
- l'éclaircissage ou la vendange manuelle par une meilleure visibilité des grappes et un temps de main d'oeuvre singulièrement diminué,
- le cas échéant, favoriser la vendange mécanique par une limitation de déchets verts dans la vendange et les pertes de jus dues à l'aspiration des feuilles,
- respecter les grappes de raisin quel que soit leur degré de maturation.

L'effeuillage de la vigne a été réalisé manuellement durant de nombreuses années et si c'est encore parfois le cas, il est actuellement généralement réalisé mécaniquement grâce à des machines prévues à cet effet. La plupart de ces machines utilisent désormais le principe d'un tambour d'attraction rotatif ajouré comportant ou générant des ouvertures, plaqué sur le matelas végétal. On organise alors au travers desdites ouvertures une dépression au moyen d'un flux d'air permettant de plaquer les feuilles du matelas végétal sur ledit tambour d'attraction rotatif ajouré pour les conduire vers des moyens de coupe ou d'arrachement de celles-ci.

Il faut noter que l'aspiration au niveau du matelas végétal ne conduit pas uniquement à une attraction des feuilles mais aussi à une aspiration d'autres objets proches du tambour d'attraction rotatif ajouré tels que des baies de raisins. L'opération d'effeuillage est effectuée en effet pendant la phase de maturation de ces baies et peut démarrer dès l'instant où ces baies présentent un diamètre de l'ordre du millimètre jusqu'au moment des vendanges où elles présentent un diamètre d'un ordre de grandeur dimensionnel en fonction des cépages de 10 à 20 mm. Or ces baies sont très fragiles. Dans un premier temps de leur croissance, elles ont un diamètre inférieur à une dimension de l'ordre de 5 millimètres, sont apparentées à des petites billes assez dures, et sont peu sensibles aux blessures issues des chocs mais peuvent être détachées de la grappe lors de ces choc. Dans un deuxième temps, les baies poursuivent leur croissance et commencent à devenir plus molles, phase où elles sont alors de plus en plus sensibles aux coups et blessures issus des chocs favorisant l'apparition de maladies qu'elles propageront ensuite à la grappe voire aux grappes voisines. On voit bien alors que la génération de chocs au niveau des baies est néfaste et entraine :
- une diminution de la quantité de vendange de baies saines ;
- des risques phytosanitaires importants au niveau du vignoble ;
- une consommation accrue de produits de traitement phytosanitaires.

Ainsi, en cas d'effeuillage mécanique sans précautions particulières, les effets bénéfiques de cette opération peuvent être largement contrebalancés par les inconvénients décrits ci-dessus.

De telles machines sont décrites et illustrées notamment dans les documents suivants de l'état de l'art : EP-1.657.975, FR-2.897.752, WO-01/87047, FR-2.417.932 et FR-2.808.964.

Le document EP-1.657.975 a pour objet un dispositif d'effeuillage comprenant une enceinte dont l'extrémité proximale est positionnée en regard du matelas végétal et son extrémité distale opposée comporte une turbine aspirant les feuilles dudit matelas végétal en créant une dépression générée par le flux d'air de la turbine au niveau de l'extrémité proximale, lesdites feuilles étant alors pincées par deux tambours de forme générale cylindrique animés d'un mouvement contrarotatif, c'est-à-dire tournant chacun dans un sens opposé à celui de l'autre rouleau, afin d'exercer par pincement une force suffisante d'arrachement desdites feuilles. La surface latérale du premier tambour présente, de haut en bas, un profil en forme de créneaux, constitué par une alternance de nervures et de rainures superposées, alors que la surface latérale du second tambour présente un profil rectiligne. Au niveau de la partie en regard des premier et deuxième tambours, les rainures du premier tambour associées à la surface cylindrique du second tambour génèrent des ouvertures superposées de dimensions réduites permettant la circulation d'un flux d'air en direction de la turbine et assurant le placage des feuilles sur le premier tambour par aspiration. Le mouvement contrarotatif rapide des deux tambours conduit alors les feuilles plaquées sur le premier tambour à être pincées puis arrachées.

Selon la machine décrite dans le document EP-1.657.975, les ouvertures ainsi générées sont réduites et ne sont pas suffisantes pour plaquer les feuilles sur toute la partie du premier tambour située en regard du matelas végétal. De plus, l'aspiration des feuilles du matelas végétal est gênée par la présence des tambours qui forment un écran au flux d'air d'aspiration desdites feuilles canalisé dans les ouvertures superposées ménagées entre les deux tambours, ce qui nécessite une puissance d'aspiration importante pour compenser les pertes de charge de l'aspiration et génère un coût énergétique élevé. En outre, avec un tel dispositif, les baies de raisin en cours de maturation à ce stade de l'effeuillage peuvent être aspirées ou blessées au travers desdites ouvertures car celles-ci, pour permettre le passage d'un flux d'air apte à aspirer les feuilles du matelas végétal, sont de fait suffisamment grandes pour être de taille plus importante qu'une baie de raisin non mature telle qu'on peut la rencontrer pendant la période d'effeuillage. Les turbulences générées par le flux d'air dans les ouvertures conduisent alors à faire vibrer la baie au sein de l'ouverture, baie qui subira alors inévitablement des chocs au contact des parois de l'ouverture. Une réduction de la taille des ouvertures pour éviter l'aspiration de ces baies conduirait d'une part à diminuer considérablement la taille des ouvertures et par conséquent l'effet d'aspiration des feuilles du matelas végétal et, d'autre part, faciliterait le colmatage desdites ouvertures par les poussières et petits déchets générés par le déplacement de la machine le long du rang de vigne. Ainsi, dans les conditions de fonctionnement de la machine objet de ce document, beaucoup de baies de raisins peuvent être arrachées ou blessées par les chocs dans les ouvertures.

Le document FR-2.897.752 a pour objet une machine d'effeuillage comprenant une tête munie de deux tambours contrarotatifs à savoir un premier tambour d'attraction rotatif ajouré comportant des ouvertures constituées par une pluralité de trous ménagés dans la surface latérale dudit premier tambour, et un second tambour sans ouvertures et coopérant avec ledit premier tambour d'attraction rotatif ajouré. Les deux tambours ont des profils sensiblement rectilignes, le premier tambour d'attraction rotatif ajouré étant associé à des moyens d'aspiration à l'une de ses extrémités générant un flux d'air à l'intérieur de celui-ci apte à générer une dépression au niveau de ses ouvertures de manière à pouvoir aspirer les feuilles du matelas végétal avec lequel il est en contact. Les feuilles sont ensuite pincées entre les deux tambours contrarotatifs et arrachées de leurs branches.

Toutefois, avec une machine du type de celle du document FR-2.897.752, les baies de raisin en cours de maturation à ce stade de l'effeuillage peuvent être aspirées ou blessées au travers desdites ouvertures car celles-ci, pour permettre le passage d'un flux d'air apte à aspirer les feuilles du matelas végétal, sont de fait suffisamment grandes pour être de taille plus importante qu'une baie de raisin non mature telle qu'on peut la rencontrer pendant la période d'effeuillage. De plus, en considérant le fonctionnement d'une section droite du tambour d'attraction rotatif ajouré au niveau de l'une de ses ouvertures lors du fonctionnement de la machine, on comprend qu'une baie de raisin arrivant en contact avec une portion pleine de sa surface cylindrique va être soudainement aspirée par le flux d'air au niveau de la portion de la surface cylindrique du tambour d'attraction rotatif ajouré présentant une ouverture puis va revenir sur une nouvelle portion pleine de sa surface cylindrique. La baie de raisin va alors pénétrer de façon totale ou partielle à l'intérieur de l'ouverture et peut alors être arrachée ou tout au moins subir un choc et être blessée lorsqu'elle reprend contact avec la partie cylindrique pleine. De plus, compte tenu de la vitesse de rotation importante du tambour d'attraction rotatif ajouré (de l'ordre de 1000 tours/min), cette même baie peut donc être amenée à être choquée, et donc blessée, à plusieurs reprises au niveau d'une ouverture, voire d'une pluralité d'ouvertures, présente(s) sur la section droite du tambour d'attraction rotatif ajouré au niveau de la baie. Une réduction de la taille des ouvertures pour éviter l'aspiration de ces baies conduirait d'une part à diminuer considérablement la taille des ouvertures et par conséquent l'effet d'aspiration des feuilles du matelas végétal et, d'autre part, faciliterait le colmatage desdites ouvertures de dimension réduite par les poussières et petits déchets générés par le déplacement de la machine le long du rang de vigne, mais n'empêcherait toutefois pas des chocs, même légers lors du passage des baies au niveau des ouvertures. Ainsi, dans les conditions de fonctionnement de la machine objet de ce document, beaucoup de baies de raisins peuvent être arrachées ou blessées par les chocs dans les ouvertures.

La présente invention a pour but d'apporter des solutions aux problèmes découlant des inconvénients des dispositifs de l'état de la technique en proposant un tambour d'attraction rotatif ajouré comportant des ouvertures, apte à fonctionner par exemple sur les machines de l'état de l'art précité et permettant d'assurer une qualité d'effeuillage optimale en assurant une aspiration et un plaquage des feuilles sur la partie dudit tambour d'attraction rotatif ajouré en regard du matelas végétal, tout en évitant de générer, dans ces ouvertures, des chocs au niveau des baies de raisin ayant pour conséquence des blessures ou la perte de baies de raisin, entrainant alors des risques phytosanitaires importants dans le vignoble, une surconsommation de traitements phytosanitaires et limitant la vendange de baies saines.

Selon l'invention, le but est atteint en réalisant un tambour d'attraction rotatif ajouré de forme générale cylindrique et comportant des ouvertures, ce tambour d'attraction rotatif ajouré étant apte à être monté sur une tête d'effeuillage des feuilles d'un matelas végétal constitué par un rang de vigne, ladite tête d'effeuillage comportant des moyens moteurs pour entrainer la rotation dudit tambour d'attraction rotatif ajouré ainsi que des moyens permettant de générer un flux d'air organisant une dépression dans lesdites ouvertures pour aspirer les feuilles du matelas végétal sur la surface dudit tambour d'attraction rotatif ajouré lorsqu'il est positionné en regard dudit matelas végétal, ce tambour d'attraction rotatif ajouré étant principalement remarquable en ce qu'il est constitué par la superposition d'une pluralité d'anneaux présentant une surface externe cylindrique et d'une pluralité d'ouvertures annulaires ménagées entre deux anneaux successifs, ces ouvertures permettent le passage d'un flux d'air d'aspiration au travers et vers l'intérieur du tambour d'attraction rotatif ajouré, ledit tambour d'attraction rotatif ajouré comportant, intérieurement, des moyens d'assemblage rigide de la pluralité d'anneaux empilés et un moyen d'accouplement à une motorisation permettant son entrainement en rotation.

Selon un mode d'exécution avantageux, les moyens d'assemblage rigide des anneaux comprennent, d'une part, des bossages d'assemblage disposés à distance de la périphérie des anneaux et reliés à la paroi interne desdits anneaux, lesdits bossages comportant des alésages d'axes parallèles à l'axe des anneaux et, d'autre part, des barreaux rigides traversant les alésages des bossages desdits anneaux superposés.

Selon un autre mode d'exécution, le moyen d'accouplement du tambour à une motorisation apte à réaliser l'entrainement en rotation de ce dernier, comprend, d'une part, un manchon central rattaché à la paroi interne de chaque anneau d'extrémité, par exemple par l'intermédiaire d'entretoises radiales, et, d'autre part, un arbre axial d'accouplement traversant les alésages de chaque manchon central et lié en rotation sur ces derniers par des moyens tels que des goupilles ou des vis de serrage, ledit arbre étant agencé pour permettre l'accouplement, directement ou indirectement, aux moyens moteurs d'entrainement en rotation des tambours de façon connue en soi, par exemple les arbres axiaux de chaque tambour étant reliés par des pignons, l'un de ces pignons étant relié au pignon accouplé à un moteur hydraulique.

Ainsi, un tel tambour d'attraction rotatif ajouré peut aisément coopérer avec un tambour contrarotatif cylindrique au sein d'une machine comprenant une tête d'effeuillage telle que celles décrites dans l'état de l'art pour assurer le pincement et l'arrachement des feuilles du matelas végétal préalablement plaquées par aspiration sur le tambour d'attraction rotatif ajouré.

Sur un tel tambour d'attraction rotatif ajouré, on peut aussi bien générer un flux d'air au travers des ouvertures dans un axe perpendiculaire à l'axe du tambour d'attraction rotatif ajouré, par exemple en organisant celui-ci par une turbine positionnée à l'arrière de l'ensemble constitué par les deux tambours en regard du matelas végétal, ou de manière plus avantageuse en organisant ce flux d'air au travers des ouvertures et vers l'intérieur du tambour d'attraction rotatif ajouré en positionnant par exemple l'entrée d'air d'une turbine aspirant l'air intérieur du tambour d'attraction rotatif ajouré au niveau de l'un voire de ses deux anneaux d'extrémités ajourés. Et de manière encore plus avantageuse, il est souhaitable de canaliser ce flux d'air au niveau de la partie du tambour d'attraction rotatif ajouré en regard du matelas végétal en positionnant un écran tel que par exemple une plaque métallique en arc de cercle en regard de la surface du tambour d'attraction rotatif ajouré sur laquelle les ouvertures n'ont pas d'action fonctionnelle vis-à-vis du matelas végétal.

On comprend aussi que les ouvertures annulaires présentent une hauteur réduite pour éviter de blesser les baies de raisin, situées au sein du matelas végétal et qui pourraient être aspirées au niveau desdites ouvertures. La baie est dans ce cas accompagnée au niveau de la surface de l'ouverture tout en gardant un contact au moins partiel avec au moins une des surfaces des anneaux positionnés de part et d'autre de cette ouverture et évitant ainsi à ladite baie de pénétrer vers l'intérieur de cette ouverture et y subir des chocs. Ainsi, la surface de la baie en regard de l'ouverture est très petite et limite de fait les efforts d'attraction de ladite baie sur cette ouverture, la baie étant ainsi moins sensible à l'aspiration au niveau de l'ouverture et pouvant se dégager rapidement de celle-ci sans dommages lorsqu'elle est amenée préalablement à son contact. Par contre, une feuille ayant de fait une grande surface en regard du tambour d'attraction rotatif ajouré subira des efforts d'attraction sur ce dernier au niveau de plusieurs ouvertures, favorisant son maintien sur la surface dudit tambour d'attraction rotatif ajouré.

Bien entendu, en cas d'effeuillage très précoce, il est alors possible que la taille des baies soit suffisamment petite pour pénétrer à l'intérieur de l'ouverture, mais les efforts d'attraction de ladite baie sont alors très faibles, les chocs qu'elle pourrait alors y subir ne sont pas dommageables à ce stade sur la qualité de la baie au moment des vendanges, elle est aussi suffisamment légère pour éviter d'être arrachée trop facilement et surtout la croissance des baies est très rapide et elle ne se retrouvera pas dans la même situation dès la prochaine opération d'effeuillage.

Selon un mode d'exécution, les ouvertures annulaires séparant les anneaux ont une hauteur comprise entre 2 mm et 5 mm, et, de préférence, une hauteur de 3 mm.

De manière avantageuse, chaque anneau possède un minimum de deux, et de préférence trois bossages comportant des alésages dont les axes sont parallèles à l'axe de l'anneau et disposés de préférence à égale distance angulaire les uns des autres sur un cercle concentrique de diamètre inférieur à celui de l'anneau. Ainsi chaque anneau présente une surface interne ajourée importante pour favoriser la circulation du flux d'air à l'intérieur du tambour d'attraction rotatif ajouré et limiter les pertes de charge.

Selon une autre disposition caractéristique, les bossages ont une hauteur supérieure à l'épaisseur des anneaux permettant, lors de l'empilement des anneaux sur les barreaux rigides, de ménager automatiquement une ouverture annulaire entre deux anneaux voisins.

Selon un mode d'exécution avantageux, les extrémités supérieure et inférieure des bossages débordent des faces supérieure et inférieure des anneaux sur une distance identique, par exemple de l'ordre de 1,5 mm. De la sorte, lorsque deux anneaux sont superposés, une ouverture annulaire d'une hauteur de l'ordre de 3 mm est ménagée entre deux anneaux adjacents.

Selon un mode d'exécution avantageux, l'extrémité supérieure de chaque bossage d'un anneau comporte un lamage alors que son extrémité inférieure comporte un épaulement de sorte que le bossage à l'extrémité inférieure d'un anneau puisse s'emboiter dans le bossage à l'extrémité supérieure de l'anneau voisin au moment de l'empilage. De la sorte, et combiné à l'assemblage sur les barreaux rigides, ce système renforce la rigidité finale du tambour d'attraction rotatif ajouré.

Selon un mode de réalisation avantageux, le tambour d'attraction rotatif ajouré comporte encore des moyens intercalés dans l'empilage entre deux anneaux permettant d'augmenter la hauteur de l'ouverture de l'épaisseur desdits moyens. Cette caractéristique a pour avantage de permettre d'ajuster la hauteur des ouvertures en fonction des vignobles traités, de la période d'effeuillage ou de l'état de la végétation au moment de l'effeuillage. Un autre avantage non négligeable est de réaliser des tambours possédant différentes hauteurs d'ouvertures en utilisant les mêmes anneaux.

Selon un mode de réalisation avantageux, le réglage en hauteur est obtenu au moyen de rondelles d'égale épaisseur entre elles disposées dans chaque lamage de l'extrémité supérieure des bossages d'un anneau.

Selon un mode de réalisation, l'empilage d'anneaux du tambour d'attraction rotatif ajouré est terminé, à chacune de ses extrémités, par un anneau d'extrémité présentant un diamètre extérieur identique au diamètre extérieur des anneaux de l'empilage, chaque anneau d'extrémité est muni de bossages d'assemblage comportant des alésages aptes à recevoir les barreaux rigides de l'empilage des anneaux, la rigidification de l'assemblage étant réalisée par des moyens de blocage, lesquels sont constitués, par exemple, par des systèmes vis écrou, de préférence des écrous freins, se vissant sur les extrémités filetées des barreaux rigides.

L'invention concerne encore une tête d'effeuillage remarquable en ce qu'elle comprend :
- un tambour d'attraction rotatif ajouré comportant une ou plusieurs des caractéristiques susmentionnées ;
- au moins un moyen d'aspiration permettant de générer un flux d'air au travers des ouvertures dudit tambour d'attraction rotatif ajouré, pour assurer un effort d'attraction des feuilles du matelas végétal en regard dudit tambour ; et
- un deuxième tambour contrarotatif présentant une paroi latérale externe de forme générale cylindrique et monté en regard de l'empilement d'anneaux du tambour d'attraction rotatif ajouré, de sorte à assurer le pincement des feuilles plaquées sur ce dernier.

Selon un mode de réalisation avantageux, le moyen d'aspiration ou chaque moyen d'aspiration est constitué par une turbine aspirante installée au-dessus de l'extrémité haute du tambour d'attraction rotatif ajouré et/ou au-dessous de l'extrémité basse de ce dernier, de façon à générer, à l'intérieur du vide interne dudit tambour d'attraction rotatif ajouré, un flux d'air d'aspiration à partir de l'une au moins desdites extrémités, ce flux d'air aspirant permettant de happer et de plaquer les feuilles contre la surface latérale cylindrique du tambour d'attraction rotatif ajouré disposée en regard du matelas végétal.

Selon un autre mode d'exécution avantageux, le flux d'air aspirant est généré essentiellement à travers une zone avant de la surface latérale du tambour d'attraction rotatif ajouré, et plus précisément à travers les portions en arc de cercle des ouvertures disposées dans cette zone. Il s'étend vers l'arrière après le passage du rouleau contrarotatif pour accompagner les feuilles sur le tambour d'attraction rotatif ajouré et éviter qu'elles ne viennent se coller sur la paroi du rouleau contrarotatif.

Selon un mode de réalisation préféré, la tête d'effeuillage comporte un écran fixé sur ladite tête d'effeuillage, au moyen d'éléments de fixation, en regard des portions des ouvertures situées face aux zones d'aspiration non fonctionnelles. On entend par zone non fonctionnelle une zone où les feuilles ne sont plus plaquées par aspiration sur le tambour d'attraction rotatif ajouré. Cette zone débute peu après le pincement des feuilles avec le tambour contrarotatif et permet ainsi de décoller les feuilles du tambour d'attraction rotatif ajouré sans toutefois qu'elles ne puissent être attirées et collées par le tambour contrarotatif

Selon un autre exemple de réalisation, la tête d'effeuillage comprend des moyens de nettoyage s'étendant vers l'intérieur du tambour d'attraction rotatif ajouré au-delà de la paroi latérale de ce dernier.

Selon un autre exemple de réalisation préféré, ces moyens de nettoyage sont constitués par une pluralité de lames superposées fixées rigidement sur l'écran et conformées pour s'engager dans les ouvertures de façon à pouvoir nettoyer en continu lesdites ouvertures, lors de la rotation du tambour d'attraction rotatif ajouré.

L'invention se rapporte encore aux machines d'effeuillage équipées d'une tête d'effeuillage comportant une ou plusieurs des caractéristiques techniques ci-dessus.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 montre une vue en perspective d'un exemple de tête d'effeuillage incorporant le tambour d'attraction rotatif ajouré selon l'invention.
La figure 2 montre une vue de face du tambour d'attraction rotatif ajouré selon l'invention monté sur son arbre de rotation.
La figure 3 montre une vue en coupe en section droite selon le plan A-A de la figure 2.

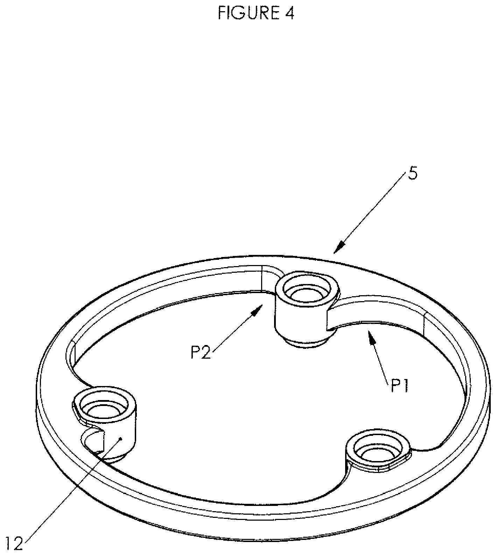

La figure 4 montre une vue en perspective de l'un des anneaux constituant l'empilage du tambour d'attraction rotatif ajouré.
La figure 5 est une vue de détail, à échelle agrandie et en coupe d'un anneau selon la ligne B-B de la figure 3.
La figure 6A est une vue de détail en coupe longitudinale analogue à la figure 5 montrant un premier mode de réalisation de l'assemblage de deux anneaux superposés.
La figure 6B est une vue de détail en coupe longitudinale analogue à la figure 5 montrant un second mode de réalisation de l'assemblage de deux anneaux superposés.
La figure 7 montre une vue en perspective de l'un des deux anneaux d'extrémité.
La figure 8 est un écorché en perspective de la tête d'effeuillage de la figure 1 vue du côté opposé au matelas végétal montrant en situation les deux rouleaux contrarotatifs ainsi que l'écran du tambour d'attraction rotatif ajouré comportant les éléments de nettoyage des ouvertures.
La figure 9 montre la structure des moyens de nettoyage du tambour d'attraction rotatif ajouré accouplés à l'écran dudit tambour d'attraction rotatif ajouré présentés en figure 6 selon le même plan A-A de la figure 2.

On se réfère auxdits dessins pour décrire un exemple de réalisation intéressant mais nullement limitatif d'un tambour d'attraction rotatif ajouré pour l'effeuillage de plantes et les têtes d'effeuillage équipées d'un tel tambour.

Dans la description qui suit et dans les revendications, l'expression « tambour d'attraction » désigne un cylindre comprenant une paroi latérale ajourée permettant le passage d'un flux d'air d'aspiration permettant de happer les feuilles du matelas végétal et de les plaquer contre la surface externe dudit cylindre ajouré.

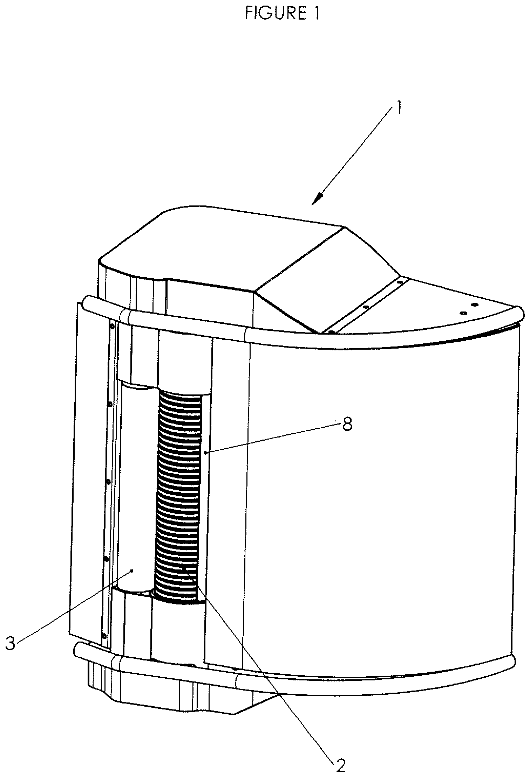

Sur la figure 1 est représenté un mode d'utilisation préféré du tambour d'attraction rotatif ajouré selon l'invention montrant une tête d'effeuillage 1 incorporant ledit tambour d'attraction rotatif ajouré 2 coopérant avec un tambour contrarotatif 3 ainsi que des moyens d'entrainement en rotation dudit tambour d'attraction rotatif ajouré 2 et des moyens de génération d'un flux d'air apte à créer une dépression au niveau des ouvertures dudit tambour d'attraction rotatif ajouré selon un mode de fonctionnement similaire à l'état de l'art décrit ci-dessus. De fait, ces différents moyens sont connus de l'homme de l'art et ne sont pas représentés sur les figures, ne faisant pas l'objet de l'invention en tant que telle.

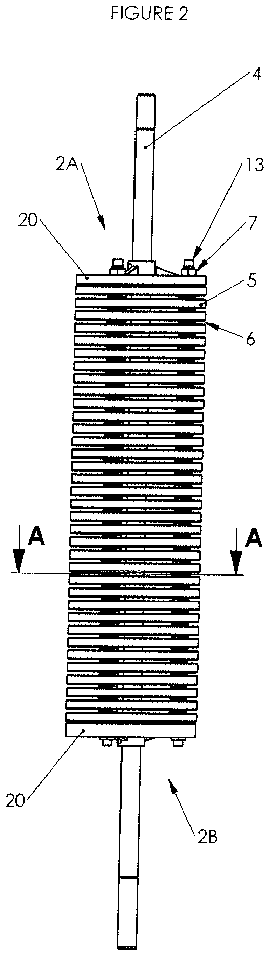

La figure 2 présente un mode de réalisation préféré du tambour d'attraction rotatif ajouré 2 de forme générale cylindrique et comportant des ouvertures annulaires 6, ce tambour d'attraction rotatif ajouré étant apte à être monté sur une tête d'effeuillage 1 permettant l'élimination d'une certaine quantité de feuilles d'un matelas végétal constitué par un rang de vigne. Cette tête comporte des moyens moteurs connus en soi pour entrainer la rotation dudit tambour d'attraction rotatif ajouré, ainsi que des moyens aussi connus en soi permettant de générer un flux d'air organisant une dépression dans lesdites ouvertures 6 pour aspirer les feuilles du matelas végétal sur la surface dudit tambour d'attraction rotatif ajouré 2 lorsqu'il est positionné au niveau de la surface dudit matelas végétal. Ce tambour d'attraction rotatif ajouré présente une surface latérale de forme générale cylindrique s'étendant entre ses deux extrémités 2A, 2B, et il est principalement remarquable en ce qu'il est constitué d'un empilage successif d'anneaux cylindriques 5 de diamètre identique et séparés par des ouvertures 6 de forme générale annulaire. Autrement dit, le tambour d'attraction rotatif ajouré 2 est constitué par une alternance d'anneaux et d'ouvertures annulaires. Ces ouvertures sont conformées pour éviter, pendant l'opération d'aspiration des feuilles, les chocs sur les autres composants de ce matelas végétal tels que des baies de raisin qui seraient amenées à rentrer en contact avec les ouvertures 6 dudit tambour d'attraction rotatif ajouré 2.

De manière avantageuse, les ouvertures 6 sont de faible hauteur, par exemple d'une dimension de 3 millimètres, pour présenter une faible surface d'aspiration et donc un effort ou effet d'attraction limité sur les petits objets liés au matelas végétai autres que les feuilles, tels que des baies de raisin en cours de maturation, et en cas d'aspiration de ces derniers, les accompagner sans choc jusqu'à ce que lesdits objets soient ramenés au sein du matelas végétal par leur lien à celui-ci, tel que par exemple les grappes.

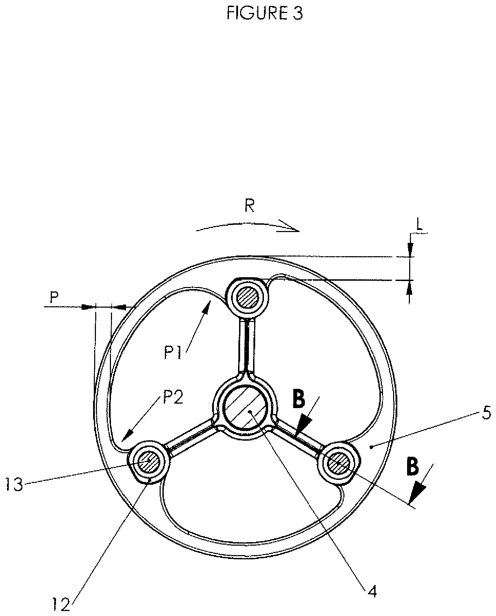

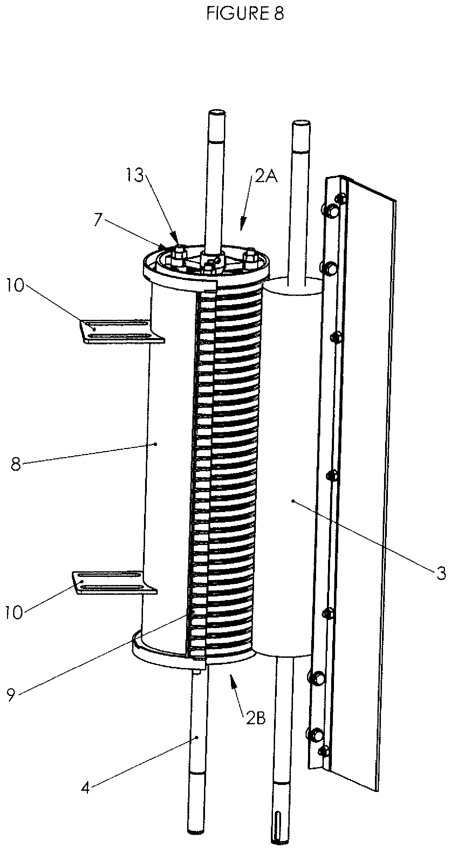

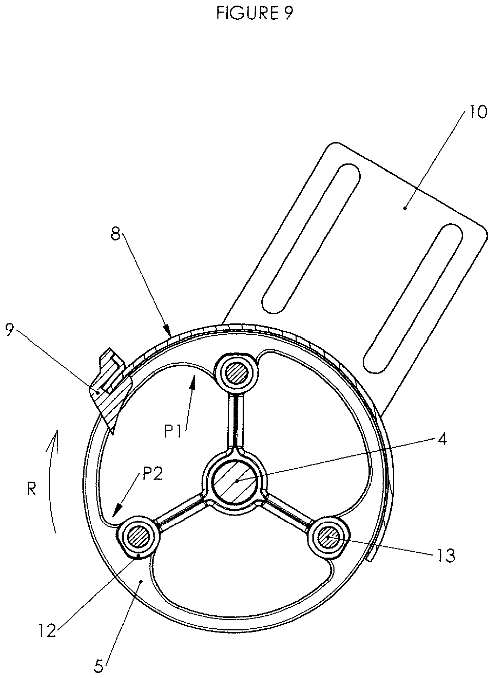

De manière avantageuse, le tambour d'attraction rotatif ajouré 2 est constitué par un assemblage successif d'anneaux 5 complété à chacune de ses extrémités par un anneau d'extrémité 20, empilés autour d'un axe de rotation commun représenté par l'arbre axial d'accouplement 4 à la tête d'effeuillage 1, tel que présentés sur les figures 2, 3, 8 et 9. Ce tambour d'attraction rotatif ajouré comporte des moyens d'assemblage 12, 13 et 7 de cet empilement d'anneaux, constitués dans le mode de réalisation préféré illustré notamment dans les figures 2, 3, 8 et 9 par trois barreaux rigides filetés à chacune de leur extrémité traversant longitudinalement le tambour d'attraction rotatif ajouré 2 d'une extrémité à l'autre en passant au travers des alésages des bossages 12 de chacun des anneaux et disposés à égale distance angulaire les uns des autres, et donc distants ici de 120°. Des moyens de blocage 7 tels que des écrous freins permettent de compléter la rigidité de l'empilage des anneaux et de supprimer les jeux entre les anneaux permettant ainsi d'éviter les mouvements intempestifs des parois des anneaux qui pourraient générer des chocs sur les baies de raisin en contact avec les ouvertures. Les moyens d'assemblage 12, 13, et en particulier les bossages 12 munis d'un alésage traversant, sont disposés à proximité et en retrait de la périphérie des anneaux 5. Autrement dit, lesdits bossages sont disposés à distance et à l'intérieur du volume délimité par la surface périphérique des anneaux. Cela permet d'une part de rigidifier suffisamment l'ensemble de l'empilage en rotation à grande vitesse (par exemple de l'ordre de 1000 tours/minute) mais surtout de définir des ouvertures annulaires de grand volume tout en conservant une épaisseur réduite. Le flux d'air pourra alors générer ses effets sur la quasi-totalité de la surface des ouvertures 6, n'étant perturbé que par la proximité des bossages 12.

De manière avantageuse, la périphérie de chaque anneau 5 est constituée entre deux bossages 12 d'une paroi de largeur P et la paroi des bossages à proximité de la périphérie de l'anneau 5 est distante de cette dernière d'une largeur L supérieure à P pour permettre le passage des moyens de nettoyage 9 décrits ci-après lors du fonctionnement de la tête d'effeuillage

De manière avantageuse, chaque bossage 12 a une forme générale cylindrique tronquée toutefois dans sa partie à proximité de la périphérie de l'anneau 5 pour permettre le passage des moyens de nettoyage 9 tout en permettant de positionner l'axe des barreaux rigides 13 le plus possible vers la périphérie des anneaux 5.

Les moyens 12, 13 d'empilement prévoient entre autre de disposer les anneaux 5 à une distance prédéfinie les uns des autres de façon à constituer les ouvertures annulaires 6 du tambour d'attraction rotatif ajouré 2.

Les bossages 12 ont une hauteur H supérieure à l'épaisseur e des anneaux 5.

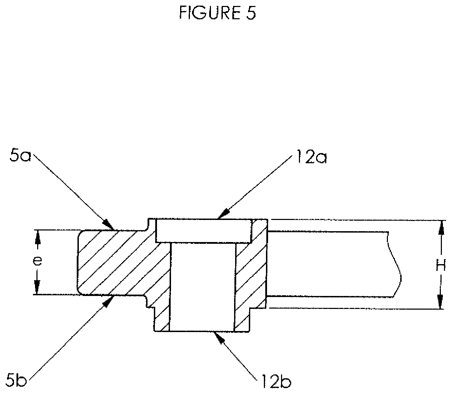

De manière avantageuse, les extrémités supérieure 12a et inférieure 12b des bossages 12 débordent des faces supérieure 5a et inférieure 5b des anneaux 5 par exemple sur une distance identique, de l'ordre de 1,5 mm (figure 5). De la sorte, lorsque deux anneaux 5 sont empilés, une ouverture annulaire 6 d'une hauteur h de l'ordre de 3 mm est automatiquement ménagée entre ces deux anneaux adjacents.

Selon une autre disposition caractéristique de l'invention, l'extrémité supérieure 12a du bossage 12 de la face supérieure 5a d'un anneau 5 comporte un lamage et l'extrémité inférieure 12b du bossage 12 de la face inférieure 5b de l'anneau 5 comporte un épaulement de sorte que l'épaulement de l'extrémité 12b d'un anneau s'emboite dans le lamage de l'extrémité 12a de l'anneau voisin au moment de l'empilement des anneaux sur les barreaux rigides 13. Cette caractéristique favorise la rigidité de l'empilage.

Selon une autre disposition caractéristique de l'invention, le tambour d'attraction rotatif ajouré 2 comporte encore des moyens d'épaisseur h1 permettant d'augmenter la hauteur des ouvertures 6, c'est-à-dire la grandeur des intervalles entre deux anneaux 5 successifs. Ainsi, la hauteur de l'ouverture 6 se trouve augmentée de l'épaisseur h1 desdits moyens. Cette caractéristique a pour avantage de permettre d'ajuster la hauteur des ouvertures en fonction des vignobles traités, de la période d'effeuillage ou de l'état de la végétation au moment de l'effeuillage, mais aussi de pouvoir réaliser différents tambours d'effeuillage avec des épaisseurs d'ouverture différentes tout en utilisant les mêmes anneaux.

Selon un monde de réalisation avantageux, les moyens de réglage en hauteur de l'ouverture sont constitués par des rondelles 11 d'épaisseur h1 disposées entre deux anneaux 5 voisins.

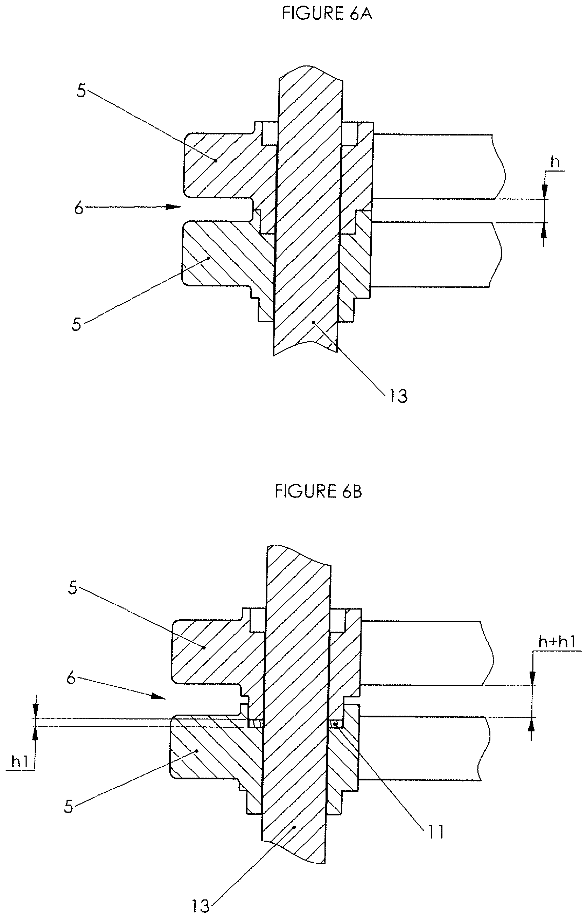

Selon un exemple d'exécution préféré tel que représenté sur la figure 6B, les rondelles 11 de réglage en hauteur sont insérées dans les lamages de chacune des extrémités supérieures 12a des bossages 12 d'un anneau 5.

Selon un autre exemple de réalisation, cette différence de hauteur pourrait être obtenue à l'aide de différents anneaux 5 de même épaisseur e présentant des bossages 12 de hauteurs différentes de sorte que l'empilement de deux anneaux successifs générerait des ouvertures 6 de hauteurs différentes.

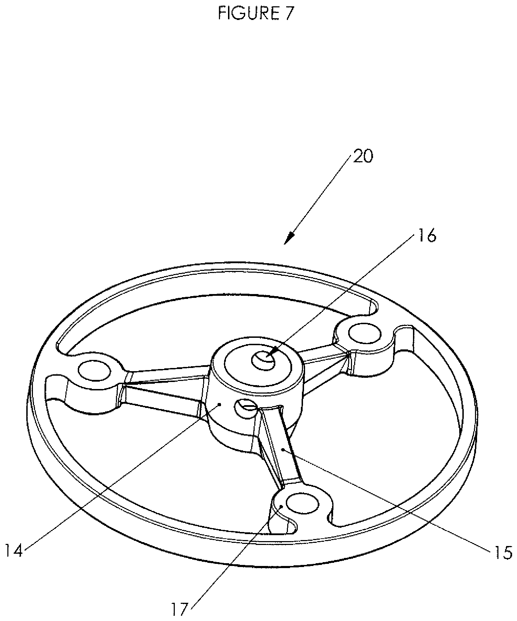

Les extrémités 2A, 2B du tambour d'attraction rotatif ajouré 2 sont constituées par des anneaux d'extrémité 20 (figure 7) présentant un diamètre extérieur identique au diamètre extérieur des anneaux intermédiaires 5. Ces anneaux d'extrémité sont également munis de bossages d'assemblage 17. Ces anneaux d'extrémité 20 sont fixés au moyen des barreaux rigides 13 traversant les alignements de bossages 17-12-17, la rigidification de l'assemblage est réalisée par des moyens de blocage 7, lesquels sont, par exemple, constitués par des systèmes vis écrou, de préférence des écrous freins, se vissant sur les extrémités filetées des barreaux rigides d'assemblage 13. Cet assemblage permet ainsi de fixer la structure du tambour d'attraction rotatif ajouré et assure la rigidité de celui-ci au cours de son fonctionnement en évitant des déformations relatives des anneaux pouvant conduire à des déformations des ouvertures qui pourraient entrainer des chocs au niveau des baies de raisins.

Le tambour d'attraction rotatif ajouré 2 est muni d'un arbre axial 4 agencé pour permettre l'accouplement, directement ou indirectement, à une motorisation M d'entrainement en rotation. Cet arbre traverse un manchon central 14 dont sont pourvus les anneaux d'extrémité 20, ce manchon central 14 étant relié rigidement, par l'intermédiaire d'entretoises radiales 15, aux bossages 17 des anneaux d'extrémité ou, à la paroi interne de ceux-ci. Des moyens assurent la liaison rigide de l'arbre d'entrainement 4 avec le tambour d'attraction rotatif ajouré 2. Par exemple, ces moyens sont constitués par des vis (non représentées) traversant des alésages radiaux 16 ainsi que les manchons 14 de façon à rendre solidaire le tambour d'attraction rotatif ajouré de l'arbre axial pour son entrainement en rotation.

L'invention concerne également les têtes d'effeuillage 1 comprenant un tambour d'attraction rotatif ajouré 2 comportant toutes ou partie des caractéristiques décrites précédemment, ainsi que les machines munies d'une telle tête d'effeuillage.

Dans ce cas, le dispositif d'attraction permettant de plaquer le feuillage des ceps de vigne contre la paroi latérale du rouleau d'attraction constitué d'un empilement d'anneaux 20-5-20 séparés par des ouvertures annulaires 6, comprend au moins un moyen d'aspiration permettant de générer un flux d'air aspirant à l'intérieur du tambour d'attraction rotatif ajouré 2.

Ce moyen d'aspiration ou chaque moyen d'aspiration peut être constitué par une turbine aspirante (non représentée sur les figures) dont l'entrée d'air peut être installée au-dessus de l'extrémité haute 2A du tambour d'attraction rotatif ajouré et/ou au-dessous de l'extrémité basse 2B de ce dernier, de façon à générer, à l'intérieur dudit tambour d'attraction rotatif ajouré, un flux d'air d'aspiration à partir de l'une au moins desdites extrémités 2A, 2B, ce flux d'air aspirant permettant de happer et de plaquer les feuilles contre la surface latérale cylindrique du tambour d'attraction rotatif ajouré 2, par l'intermédiaire des ouvertures 6. Dans ce cas, la partie intérieure du tambour d'attraction rotatif ajouré et donc celle de l'empilage des anneaux 5 est mise en communication avec l'entrée d'air d'une canalisation reliée à l'entrée principale de la turbine aspirante.

De façon alternative ou complémentaire le flux d'air aspirant peut être généré à travers une zone de la surface latérale du tambour d'attraction rotatif ajouré 2 pour plaquer les feuilles happées par le flux d'air aspirant, et plus précisément à travers les portions en arc de cercle des ouvertures 6 disposées dans cette zone.

Un moyen de coupe ou système de pincement peut être associé au tambour d'attraction rotatif ajouré 2 pour couper ou pincer les feuilles plaquées contre ledit rouleau avant de les en détacher.

Selon un mode de réalisation avantageux, la tête d'effeuillage comprend un deuxième tambour contra rotatif 3. Ce tambour contrarotatif présente une paroi latérale externe cylindrique et il est monté en regard de la surface externe cylindrique de l'empilement d'anneaux 20-5-20, de sorte qu'il puisse pincer et arracher les feuilles plaquées sur le tambour d'attraction rotatif ajouré 2.

Il comporte un arbre axial d'entrainement en rotation et sa surface est de préférence constituée d'une matière élastique telle que par exemple du caoutchouc ou du polyuréthane de façon à mieux pincer les feuilles et absorber les différentes épaisseurs de celles-ci dues à ses nervures ou à son pétiole.

La tête d'effeuillage 1 ainsi formée peut être suspendue, de manière connue en soi et à la portée de l'homme du métier, au châssis d'une machine d'effeuillage.

La surface interne des anneaux 5 peut aussi comprendre, entre deux moyens d'empilement 12 et en allant dans le sens de rotation R du tambour d'attraction rotatif ajouré une première surface concave P1, une paroi cylindrique de largeur P et une deuxième surface concave P2 de rayon plus petit que celui de la surface concave P1. En effet, le tambour d'attraction rotatif ajouré 2 aspire tous les petits déchets, débris et poussières situés dans le matelas végétal, mais non liés à celui-ci, à proximité du tambour d'attraction rotatif ajouré au cours de l'opération d'effeuillage. Ces déchets ont tendance à s'accumuler notamment sur les surfaces ou le flux d'air est réduit et souvent où les turbulences générées par le flux d'air les forcent à stagner localement et à se coller sur les parois à proximité. L'intérêt d'un rayon plus grand au profil concave P1 est alors de favoriser des vitesses d'air suffisantes à ce niveau pour éviter le colmatage rapide des ouvertures, alors que les colmatages au niveau du profil P2 sont organisés de façon à être facilement nettoyés via les moyens de nettoyage 9 des anneaux 5

Les anneaux 5 peuvent être réalisés dans une matière métallique telle que l'aluminium ou l'inox mais ils peuvent avantageusement être réalisés en matière plastique, de préférence par moulage, tandis que les anneaux d'extrémité sont constitués préférentiellement d'une matière métallique légère telle que l'aluminium pour reprendre efficacement les efforts de l'empilage. Les barreaux rigides liés aux moyens 12 d'empilage ainsi que l'arbre d'entrainement en rotation 4 du tambour d'attraction rotatif ajouré seront de préférence réalisés en acier. Cette structure est ainsi simple à assembler et légère, le tambour d'attraction rotatif ajouré étant en effet prévu pour fonctionner avec des vitesses de rotation rapides, par exemple de l'ordre de 1000 tr/mn, pour assurer un effeuillage efficace.

Par ailleurs, dans le mode de réalisation préféré du tambour d'attraction rotatif ajouré fonctionnant à partir d'un ou deux flux d'airs liés chacun aux extrémités 2A, 2B et pour optimiser l'énergie liée à la génération du ou des flux d'airs au travers des ouvertures annulaires 6, il est avantageux de limiter la portion active de ces dernières à la zone en regard du matelas végétal correspondant sensiblement à la zone de placage des feuilles. Un écran 8 peut donc être fixé sur la tête d'effeuillage 1 au moyen d'éléments de fixation appropriés 10 pour être positionné en regard des portions des ouvertures 6 situées face aux zones d'aspiration non fonctionnelles et d'orienter l'aspiration des feuilles majoritairement vers le matelas végétal. On entend par zone non fonctionnelle une zone où les feuilles ne sont plus plaquées par aspiration sur le tambour d'attraction rotatif ajouré. Cette zone débute peu après le pincement des feuilles avec le tambour contrarotatif et permet ainsi de décoller les feuilles du tambour d'attraction rotatif ajouré sans toutefois qu'elles ne puissent être attirées et collées par le tambour contrarotatif. Il aura aussi l'avantage de procéder au décollage des feuilles après leur arrachement par les tambours contrarotatifs en supprimant l'effort d'attraction dès que celles-ci atteindront l'écran. Elles pourront ainsi tomber au sol par gravité au-dessous de la tête d'effeuillage.

De manière avantageuse, cet écran 8 peut intégrer des moyens de nettoyage 9 en continu des rouleaux disposés au travers des ouvertures 6, qui sont ainsi fixes par rapport à la tête d'effeuillage 1 et mobiles par rapport au tambour d'attraction rotatif ajouré 2 et donc par rapport aux anneaux cylindriques 5.

Les moyens de nettoyage 9 sont par exemple constitués par une pluralité de lames superposées fixées rigidement sur l'écran 8 lié à la machine et conformées pour s'engager dans les ouvertures 6 de façon à pouvoir nettoyer en continu lesdites ouvertures. Leur extrémité s'étend vers l'intérieur des ouvertures du tambour d'attraction rotatif ajouré, au-delà de la paroi d'épaisseur P des anneaux cylindriques 5 sans toucher toutefois aux moyens 12 d'empilement desdits anneaux disposés à une distance L de la surface cylindrique extérieure des anneaux 5, distance supérieure à l'épaisseur P de la paroi cylindrique desdits anneaux. Ils ont par ailleurs une épaisseur inférieure à la distance entre deux anneaux contigus et sont par exemple constitués dans une tôle d'acier de 2 mm d'épaisseur, pour garder un jeu de fonctionnement suffisant avec les anneaux entre lesquels ils sont disposés en évitant de générer ainsi trop de perte d'énergie par frottement avec lesdits anneaux tout en assurant un nettoyage en continu des ouvertures.

## Revendications

1. Tambour d'attraction rotatif ajouré de forme générale cylindrique et comportant des ouvertures, ce tambour étant apte à être monté sur une tête d'effeuillage des feuilles d'un matelas végétal tel qu'un rang de vigne, **caractérisé en ce qu'**il comporte la superposition d'une pluralité d'anneaux (5) présentant une surface externe cylindrique, et d'une pluralité d'ouvertures annulaires (6) ménagées entre deux anneaux successifs, ces ouvertures permettant le passage d'un flux d'air d'aspiration au travers et vers l'intérieur du tambour d'attraction rotatif ajouré, ledit tambour d'attraction rotatif ajouré comportant, intérieurement, des moyens d'assemblage rigide de la pluralité d'anneaux empilés et un moyen d'accouplement à une motorisation permettant son entrainement en rotation.

2. Tambour d'attraction rotatif ajouré suivant la revendication 1, **caractérisé en ce que** l'empilage d'anneaux (5) dont il est constitué est terminé, à chacune de ses extrémités (2A, 2B), par un anneau d'extrémité (20) présentant un diamètre extérieur identique au diamètre extérieur des autre anneaux de l'empilage.

3. Tambour d'attraction rotatif ajouré selon l'une des revendications 1 ou 2, **caractérisé en ce que** les moyens d'assemblage rigide des anneaux (5, 20) comprennent, d'une part, des bossages d'assemblage (12, 17) disposés à distance de la périphérie des anneaux et reliés à la paroi interne desdits anneaux, lesdits bossages comportant des alésages d'axes parallèles à l'axe des anneaux et, d'autre part, des barreaux rigides (13) traversant les alésages des bossages (12, 17) desdits anneaux superposés, lesdits barreaux rigides (13) comportant à leur extrémité des moyens de blocage (7) tels qu'un système vis écrou, de préférence constitué par un écrou frein, les extrémités de chaque barreau rigide étant alors filetées, pour compléter l'assemblage de l'empilage d'anneaux.

4. Tambour d'attraction rotatif ajouré suivant l'une des revendications 2 ou 3, **caractérisé en ce que** le moyen d'accouplement à une motorisation apte à réaliser l'entrainement en rotation dudit tambour d'attraction rotatif ajouré, comprend, d'une part, un manchon central (14) rattaché à la paroi interne de chaque anneau d'extrémité (20) par l'intermédiaire d'entretoises radiales (15), et, d'autre part, un arbre axial d'accouplement (4) traversant les alésages de chaque manchon central (14) et lié en rotation sur ces derniers par des moyens de liaison rigide tels que des vis de serrage, ledit arbre étant agencé pour permettre l'accouplement, directement ou indirectement, aux moyens moteurs d'entrainement en rotation des tambours.

5. Tambour d'attraction rotatif ajouré selon l'une quelconque des revendications 1 à 4, **caractérisé en ce que** les ouvertures annulaires (6) séparant les anneaux (5) ont une hauteur (h) comprise entre 2 mm et 5 mm, et, de préférence, une hauteur de 3 mm.

6. Tambour d'attraction rotatif ajouré suivant l'une quelconque des revendications 3 à 5, **caractérisé en ce que** chaque anneau et anneau d'extrémité (5, 20) possède au moins deux, et de préférence trois bossages (12, 17) comportant des alésages dont les axes sont parallèles à l'axe des anneaux et disposés de préférence à égaie distance angulaire les uns des autres sur un cercle concentrique de diamètre inférieur à celui des anneaux.

7. Tambour d'attraction rotatif ajouré selon l'une quelconque des revendications 3 à 6, **caractérisé en ce que** les bossages (12) ont une hauteur (H) supérieure à l'épaisseur (e) des anneaux (5), permettant, lors de l'empilement des anneaux sur les barreaux rigides (13), de ménager automatiquement une ouverture annulaire (6) entre deux anneaux voisins.

8. Tambour d'attraction rotatif ajouré suivant l'une quelconque des revendications 3 à 7, **caractérisé en ce que** les extrémités supérieure (12a) et inférieure (12b) des bossages (12) débordent des faces supérieure (5a) et inférieure (5b) des anneaux (5) sur une distance identique de l'ordre de 1,5 mm de sorte que lorsque deux anneaux sont superposés, une ouverture annulaire (6) d'une hauteur (h) de l'ordre de 3 mm est ménagée entre ces deux anneaux adjacents.

9. Tambour d'attraction rotatif ajouré selon l'une quelconque des revendications 3 à 8, **caractérisé en ce que** l'extrémité supérieure (12a) de chaque bossage (12) d'un anneau (5) comporte un lamage alors que son extrémité inférieure (12b) comporte un épaulement de sorte que le bossage à l'extrémité inférieure d'un anneau puisse s'emboiter dans le bossage à l'extrémité supérieure de l'anneau voisin au moment de l'empilage.

10. Tambour d'attraction rotatif ajouré selon l'une quelconque des revendications 1 à 9, **caractérisé en ce qu'**il comporte des moyens intercalés dans l'empilage entre deux anneaux (5) permettant d'augmenter la hauteur des ouvertures (6) de l'épaisseur desdits moyens.

11. Tambour d'attraction rotatif ajouré suivant l'une des revendications 9 ou 10, **caractérisé en ce que** le réglage de la hauteur des ouvertures (6) est obtenu au moyen de rondelles (11) d'égale épaisseur entre elles disposées dans chaque lamage de l'extrémité supérieure (12a) des bossages (12) d'un anneau (5).

12. Tête d'effeuillage **caractérisée en ce qu'**elle comprend :
- un tambour d'attraction rotatif ajouré (2) réalisé selon l'une quelconque des revendications 1 à 11 ;
- au moins un moyen d'aspiration permettant de générer un flux d'air au travers des ouvertures dudit tambour d'attraction rotatif ajouré pour assurer un effort d'attraction des feuilles du matelas végétal en regard dudit tambour ; et
- un deuxième tambour contrarotatif (3) présentant une paroi latérale externe de forme générale cylindrique et monté en regard de l'empilement d'anneaux (20-5-20) du tambour d'attraction rotatif ajouré (2), de sorte à assurer le pincement des feuilles plaquées sur ce dernier.

13. Tête d'effeuillage selon la revendication 12, **caractérisée en ce que** le moyen d'aspiration ou chaque moyen d'aspiration est constitué par une turbine aspirante installée au-dessus de l'extrémité haute (2A) du tambour d'attraction rotatif ajouré (2) et/ou au-dessous de l'extrémité basse (2B) de ce dernier, de façon à générer, à l'intérieur du vide interne dudit tambour d'attraction rotatif ajouré, un flux d'air d'aspiration à partir de l'une au moins desdites extrémités (2A, 2B), ce flux d'air aspirant permettant de happer et de plaquer les feuilles contre la surface latérale cylindrique du tambour d'attraction rotatif ajouré (2), disposée en regard du matelas végétal.

14. Tête d'effeuillage selon l'une quelconque des revendications 12 ou 13, **caractérisée en ce que** le flux d'air aspirant est généré à travers une zone avant de la surface latérale du tambour d'attraction rotatif ajouré (2), et plus précisément à travers les portions en arc de cercle des ouvertures (6) disposées dans cette zone.

15. Tête d'effeuillage suivant l'une quelconque des revendications 12 à 14, **caractérisée en ce qu'**elle comporte un écran (8) fixé sur ladite tête d'effeuillage, au moyen d'éléments de fixation (10), en regard des portions des ouvertures (6) situées face aux zones d'aspiration non fonctionnelles.

16. Tête d'effeuillage selon l'une quelconque des revendications 12 à 15, **caractérisé en ce que** la tête d'effeuillage comprend des moyens de nettoyage (9) s'étendant vers l'intérieur du tambour d'attraction rotatif ajouré (2) au-delà de la paroi latérale de ce dernier.

17. Tête d'effeuillage selon la revendication 16, **caractérisée en ce que** ces moyens de nettoyage (9) sont constitués par une pluralité de lames superposées fixées rigidement sur l'écran (8) et conformées pour s'engager dans les ouvertures (6) du tambour d'attraction rotatif ajouré (2) de façon à pouvoir nettoyer en continu lesdites ouvertures, lors de la rotation dudit tambour d'attraction rotatif ajouré.

## Patentansprüche

1. Durchbrochene Drehdrommel mit Anziehungskraft von grundsätzlich zylindrischer Form, umfassend Öffnungen, wobei die Trommel ausgebildet ist auf einen Entlaubungskopf zum Entlauben eines Laubpolsters, wie zum Beispiel einer Reihe von Reben, montiert zu werden, **dadurch gekennzeichnet, dass** dieser eine Übereinanderlagerung einer Mehrzahl von Ringen (5) mit einer äußeren zylindrischen Oberfläche aufweist und eine Mehrzahl von ringförmigen Öffnungen (6), die zwischen zwei aufeinanderfolgenden Ringen vorgesehen ist, wobei diese Öffnungen einen Durchtritt eines Luftstromes durch und in das Innere der durchbrochenen Drehdrommel mit Anziehungskraft erlauben, wobei die durchbrochene Drehdrommel mit Anziehungskraft im Innern starre Montagemittel für die Mehrzahl der gestapelten Ringe und ein Ankopplungsmittel für einen motorischen Antrieb aufweist, der einen drehenden Antrieb ermöglicht.

2. Durchbrochene Drehdrommel mit Anziehungskraft gemäß Anspruch 1, **dadurch gekennzeichnet, dass** der Stapel der Ringe (5) aus dem er gebildet wird, jeweils an seinen Enden (2A, 2B) durch eine Endplatte (20) begrenzt wird, welche jeweils einen Außendurchmesser aufweisen, der identisch mit dem Außendurchmesser der anderen Ringe des Stapels ist.

3. Durchbrochene Drehdrommel mit Anziehungskraft gemäß Anspruch 1 oder 2, **dadurch gekennzeichnet, dass** die starren Montagemittel der Ringe (5,20) zum einen Verbindungsbuchsen (12,17) aufweisen, die im Abstand des Randes der Ringe angeordnet sind und an der Innenwandung der besagten Ringe verbunden sind, wobei die genannten Verbindungsbuchsen Bohrungen mit zu den Achsen der Ringe parallelen Achsen aufweisen und andererseits starre Stäbe (13), die durch die Bohrungen der Buchsen der übereinander gelagerten Ringe hindurchgehen; wobei die starren Stäbe (13) an ihren Enden Rastmittel (7) besitzen, wie ein Schraubenmutter-System, vorzugsweise mit einer Kontermutter ausgebildet, wobei die Enden jede starre Stange zur Montage mit einem Gewinde versehen sind

4. Durchbrochene Drehdrommel mit Anziehungskraft gemäß einem der Ansprüche 2 oder 3, **dadurch gekennzeichnet, dass** die Mittel zur Ankopplung an eine geeignete Motorisierung zur Erzielung einer Rotation der Drehtrommel mit Anziehungskraft einerseits eine zentrale Hülse (14) aufweisen, die an der Innenwand eines jeden Endrings (20) mit Hilfe von radialen Stegen (15) angebracht sind und andererseits eine axiale Kupplungswelle (4) die durch die Bohrungen jeder zentralen Hülse (14) geht und rotationsverbunden an letzteren mittels starren Verbindungsmittel wie Klemmschrauben angeordnet sind, wobei die genannte Welle ausgebildet ist zur direkten oder indirekten Ankopplung an die Mittel von Antriebsmotoren zum drehenden Antrieb der Trommeln.

5. Durchbrochene Drehdrommel mit Anziehungskraft gemäß einem der vorhergehenden Ansprüche 1 bis 4, **dadurch gekennzeichnet, dass** die ringförmigen Öffnungen (6), die die Ringe (5) voneinander separieren, eine Höhe zwischen 2mm und 5mm aufweisen und bevorzugt eine Höhe von 3mm.

6. Durchbrochene Drehdrommel mit Anziehungskraft gemäß einem der vorhergehenden Ansprüche 3 bis 5, **dadurch gekennzeichnet, dass** jeder Ring und Endring (5, 20) mindestens zwei und vorzugsweise drei Buchsen (12, 17) mit Bohrungen aufweist, deren Achsen zu der Achse der Ringe parallel und vorzugsweise zueinander in gleicher angulärer Distanz auf einem konzentrischen Kreis mit einem Innendurchmesser geringer als derjenige der Ringe angeordnet sind.

7. Durchbrochene Drehdrommel mit Anziehungskraft gemäß einem der vorhergehenden Ansprüche 3 bis 6, **dadurch gekennzeichnet, dass** die Buchsen (12) eine Höhe (H) besitzen, die größer ist als die Dicke der Ringe (5), so dass beim Stapeln der Ringe an den starren Stäben (13) automatisch eine ringförmige Öffnung (6) zwischen zwei benachbarten Ringen herbeigeführt wird.

8. Durchbrochene Drehdrommel mit Anziehungskraft gemäß einem der vorhergehenden Ansprüche 3 bis 7, **dadurch gekennzeichnet, dass** die oberen Enden (12a) und unteren Enden (12b) der Buchsen (12) über die oberen (5a) und unteren (5b) Oberflächen der Ringe (5) mit gleicher Distanz von etwa 1,5 mm hinausragen, so dass sich, sobald zwei Ringe übereinander gestapelt sind, eine ringförmige Öffnung (6) mit einer Höhe (h) in der Größenordnung von 3 mm zwischen den beiden benachbarten Ringen ergibt.

9. Durchbrochene Drehdrommel mit Anziehungskraft gemäß einem der vorhergehenden Ansprüche 3 bis 8, **dadurch gekennzeichnet, dass** das obere Ende (12a) jeder Buchse (12) der Ringe (5) eine Senkung aufweist, während sein unteres Ende (12b) eine Schulter besitzt, derart, dass sich die Buchse eines Ringes mit ihrem unteren Ende in die Buchse eines benachbarten Ringes mit ihrem oberen Ende beim Stapeln einpasst.

10. Durchbrochene Drehdrommel mit Anziehungskraft gemäß einem der vorhergehenden Ansprüche 3 bis 9, **dadurch gekennzeichnet, dass** Mittel zum Einlegen in den Stapel zwischen zwei Ringen (5) vorgesehen sind, um die Höhe der Öffnungen in der Dicke der Mittel zu erhöhen.

11. Durchbrochene Drehdrommel mit Anziehungskraft gemäß einem der vorhergehenden Ansprüche 9 oder 10, **dadurch gekennzeichnet, dass** das Einstellen der Höhe der Öffnungen (6) mittels Unterlegscheiben (11) mit gleicher Dicke erhalten wird, die in jede Senkung der oberen Enden (12a) der Ringe (5) eingelegt werden.

12. Entlaubungskopf **dadurch gekennzeichnet, dass** dieser folgendes umfasst:
- eine durchbrochene Drehdrommel (2) mit Anziehungskraft gemäß einem der Ansprüche 1 bis 11;
- mindestens eine Saugeinrichtung, um einen Luftstrom durch die Öffnungen der durchbrochenen Drehdrommel zu erzeugen, um einen Anziehungseffekt auf Blätter von Pflanzendecken in Richtung der genannten Trommel sicherzustellen; und
- eine zweite gegenläufige Trommel (3) mit einer äußere Seitenwand von im Wesentlichen zylindrischer Form, die dem Stapel der Ringe (20-5-20) der durchbrochenen Drehdrommel zugewandt montiert ist, derart, um das Zupfen der ergriffenen Blätter von letzterer zu gewährleisten.

13. Entlaubungskopf gemäß Anspruch 12, **dadurch gekennzeichnet, dass** das oder jedes Mittel zum Erzeugen eines Luftstromes durch eine Saugturbine gebildet wird, die über dem oberen Ende (2A) und / oder unter dem unteren Ende (2B) der durchbrochenen Drehdrommel (2) installiert ist, derart, um im inneren Hohlraum der besagten Trommel an wenigstens einem der genannten Enden (2A, 2B) einen Luftansaugstrom zu erzeugen, wobei dieser Luftansaugstrom es erlaubt Blätter zu erfassen und gegen die zylindrische Seitenwand der durchbrochenen Drehdrommel (2) zu drücken, angeordnet in Richtung der Pflanzendecken.

14. Entlaubungskopf gemäß einem der Ansprüche 12 oder 13, **dadurch gekennzeichnet, dass** der Luftansaugstrom quer zu einem Bereich vor der Seitenfläche der durchbrochenen Drehdrommel (2) erzeugt wird und genauer gesagt durch die Abschnitte der bogenförmigen Öffnungen (6), die in diesem Bereich angeordnet sind.

15. Entlaubungskopf gemäß einem der Ansprüche 12 bis 14, **dadurch gekennzeichnet, dass** dieser einen Schirm (8) aufweist, der am besagten Entlaubungskopf mit Befestigungsmitteln (10) fixiert ist, gegenüberliegend der Abschnitte der Öffnungen (6), die sich gegenüber der nicht-funktionalen Saugzonen befinden.

16. Entlaubungskopf gemäß einem der Ansprüche 12 bis 14, **dadurch gekennzeichnet, dass** der Entlaubungskopf Reinigungsmittel (9) aufweist, die sich in Richtung des Inneren der durchbrochenen Drehdrommel (2) bis zur Seitenwand hinaus erstrecken.

17. Entlaubungskopf gemäß Anspruch 16, **dadurch gekennzeichnet, dass** die Reinigungsmittel (9) durch eine Vielzahl von übereinander gelagerten Schaufeln gebildet werden, die starr auf dem Schirm (8) geformt sind, um in Eingriff in die Öffnungen (6) der durchbrochenen Drehtrommel (2) zu gelangen, um eine kontinuierliche Reinigung der genannten Öffnungen, während der Rotation der genannten durchbrochenen Drehtrommel vornehmen zu können.

## Claims

1. Apertured rotary attraction drum of a general cylindrical shape and comprising openings, said drum being suitable to be mounted on a defoliating head for stripping the leaves of a plant canopy such as a row of vines, **characterised in that** it features the superposition of a plurality of rings (5) presenting a cylindrical outer surface, and of a plurality of annular openings (6) made between two successive rings, said openings allowing the passage of a suction air flow across and towards the inside of the apertured rotary attraction drum, said rotary attraction drum comprising, internally, means for rigid assembly of the plurality of stacked rings and means for coupling to a motor drive in order to allow it to be driven in rotation.

2. Apertured rotary attraction drum according to claim 1, **characterised in that** the stack of rings (5) of which it is formed is terminated, at each of its ends (2A, 2B), by an end ring (20) having an internal diameter identical to the external diameter of the other rings of the stack.

3. Apertured rotary attraction drum according to one of claims 1 or 2, **characterised in that** the means for rigid assembly of the rings (5, 20) comprise, on the one hand, assembly bosses (12, 17) arranged at a distance from the periphery of the rings and joined to the internal wall of said rings, said bosses comprising bores with axes parallel to the axis of the rings and, on the other hand, rigid bars (13) passing through the bares of the bosses (12, 17) of said superposed rings, said rigid bars (13) comprising, at their ends, locking means (7) such as a screw-nut system, preferably consisting of a locknut, the ends of each rigid bar being threaded in order to complete the assembly of the stack of rings.

4. Apertured rotary attraction drum according to one of claims 2 or 3, **characterised in that** the means for coupling to a motor drive suitable for driving said apertured rotary attraction drum in rotation comprises, on the one hand, a central bush (14) attached to the internal wall of each end ring (20) via the intermediary of radial struts (15), and, on the other hand, an axial coupling shaft (4) passing through the bores of each central bush (14) and rotationally connected to the same by rigid connection means such as locking screws, said shaft being equipped to allow it to be directly or indirectly coupled to the motor drive means for driving the drums in rotation.

5. Apertured rotary attraction drum according to any one of claims 1 to 4, **characterised in that** the annular openings (6) separating the rings (5) have a height (h) of between 2 mm and 5 mm, and preferably a height of 3 mm.

6. Apertured rotary attraction drum according to any one of claims 3 to 5, **characterised in that** each ring and end ring (5, 20) have at least two, and preferably three bosses (12,17) comprising bores whose axes are parallel to the axis of the rings and preferably arranged at an equal angular distance relative to each other in a concentric circle with a diameter smaller than that of the rings.

7. Apertured rotary attraction drum according to array one of claims 3 to 6, **characterised in that** the bosses (12) have a height (h) greaser than the thickness (e) of the rings (5), making it possible, when stacking the rings on the rigid bars (13), to automatically provide an annular opening (6) between two adjacent rings.

8. Apertured rotary attraction drum according to any one of claims 3 to 7, **characterised in that** the upper end (12a) and lower end (12b) of the bosses (12) protrude from the upper face (5a) and lower face (5b) of the rings (5) by an identical distance in the order of 1.5 mm, so that when two rings are superposed, an annular opening (6) with a height (h) in the order of 3 mm is provided between said adjacent rings.

9. Apertured rotary attraction drum according to anyone of claims 3 to 8, **characterised in that** the upper end (12a) of each boss (12) of a ring (5) comprises a recess, while its lower end (12b) comprises a shoulder, so that the boss at the lower end of a ring can interlock with the boss at the upper end of the adjacent ring during the stacking.

10. Apertured rotary attraction drum according to any one of claims 1 to 9, **characterised in that** it comprises means interleaved in the stack between two rings (5) making it possible to increase the height of the openings (6) by the thickness of said means.

11. Apertured rotary attraction drum according to one of claims 9 or 10, **characterised in that** the adjustment of the height of the openings (6) is obtained by means of washers (11) of an equal thickness arranged in each recess of the upper end (12a) of the bosses (12) of a ring (5).

12. Defoliating head **characterised in that** it comprises:
- an apertured rotary attraction drum (2) made according to anyone of claims 1 to 11;
- at least one aspiration means making it possible to generate a flow of air through the openings of said apertured rotary attraction drum in order to provide a force of attraction for the leaves of the plant canopy towards said drum; and
- a second counter-rotating drum (3) having an external side wall of a general cylindrical shape and mounted facing the stack of rings (20-5-20) of the apertured rotary attraction drum (2), so as to pick off the leaves clinging to the latter.

13. Defoliating head according to claim 12, **characterised in that** the aspiration means or each aspiration means consists of an intake turbine installed above the upper end (2A) of the apertured rotary attraction drum (2) and/or below the lower end (2B) of the same, so as to generate, within the internal void of said apertured rotary attraction drum, a suction air flow from at least one of said ends (2A, 2B), said suction air flow making it possible to catch the leaves and make them cling to the cylindrical lateral surfaces of the apertured rotary attraction drum (2), arranged facing the plant canopy.

14. Defoliating head according to any one of claims 12 or 13, **characterised in that** the suction air flow is generated through a front area of the lateral surface of the apertured rotary attraction drum (2), and more precisely through the circular arc portions of the openings (6) arranged in said area.

15. Defoliating head according to any one of claims 12 to 14, **characterised in that** it comprises a screen (8) fixed on to said defoliating head by fixing means (10), facing portions of the openings (6) situated opposite the non-functional aspiration areas.

16. Defoliating head according to any one of claims 12 to 15, **characterised in that** the defoliating head comprises cleaning means (9) extending towards the inferior of the apertured rotary attraction drum (2) beyond the side wall of the same.

17. Defoliating head according to claim 16, **characterised in that** said cleaning means (9) consist of a plurality of superposed vanes fixed rigidly on to said screen (8) and shaped to engage in the openings (6) of the apertured rotary attraction drum (2) in such a way as to be capable of continuously cleaning said openings during the rotation of said apertured rotary attraction drum.
